# EUROPÄISCHE PATENTSCHRIFT

(11) **EP 2 803 804 B1**
(45) Veröffentlichungstag und Bekanntmachung des Hinweises auf die Patenterteilung: **26.02.2020**
(21) Anmeldenummer: 14168140.3
(22) Anmeldetag: 13.05.2014
(51) Int. Cl.: E06B 3/20, E06B 3/72, E06B 3/82, E06B 3/984, E06B 3/74, E06B 3/78, E06B 3/70, E06B 3/58

(54) **Tür**
Door
Porte

(30) Priorität: 15.05.2013 AT 503242013
(43) Veröffentlichungstag der Anmeldung: 19.11.2014
(73) Patentinhaber: IFN-Holding AG, 4050 Traun (AT)
(72) Erfinder: HOCHREITER, Herbert, 4048 Puchenau (AT); MEISINGER, Mario, 4074 Stroheim (AT)
(74) Vertreter: Burger, Hannes

(56) Entgegenhaltungen:
- EP-A2- 1 772 584
- EP-A2- 2 275 636
- DE-A1- 2 314 303
- DE-A1- 2 702 156
- DE-A1- 3 242 909
- DE-C1- 3 917 491

## Beschreibung

Die Erfindung betrifft eine Tür, insbesondere Haustür, mit einem rahmenartigen Kernelement aus miteinander verbundenen Profilelementen.

Eine Haustür wird heute immer mehr aus diversen Materialien hergestellt. Unter anderem umfassen Haustüren eine Kernlage, die zumeist ein Profil ist, das bearbeitet werden muss, um die diversen Beschläge, wie z.B. Bänder, Verschlüsse oder Griffe, aufnehmen zu können. Die Profile werden nach der Bearbeitung mit teils sehr aufwändigen Verfahren zum Rahmen gefügt.

Eine Tür gemäß dem Oberbegriff des Anspruchs 1, bei der die Profilelemente des Kernelementes als Formteil aus einem Kunststoffschaum hergestellt sind, ist aus der DE2314303A1 bekannt.

Von Vorteil ist dabei, dass der Formteil bereits in der fertigen Ausführung des Profilelementes hergestellt werden kann, d.h. dass bereits sämtliche Ausnehmungen für die Beschläge, etc., in der Formgebung des Profilelementes berücksichtigt werden können, sodass keine spanende Nachbearbeitung hierfür erforderlich ist, insbesondere die lauten Fräsarbeiten am Profilelement, bei denen zudem unter anderem auch entsprechend viel Staub anfällt, entfallen können. Es ist somit möglich, eine Normtüre ohne aufwändige Nachbearbeitung herstellen zu können. Darüber hinaus bietet die Verwendung von Formteilen aus Kunststoffschaum einerseits den Zusatznutzen, dass damit die Wärmedämmung der Tür verbessert wird, und dass andererseits die Formausfüllung und damit die Einhaltung geringer Toleranzen verbessert werden kann.

Die Aufgabe der vorliegenden Erfindung ist es, die Herstellung einer Haustür weiter zu vereinfachen.

Die Profilelemente der erfindungsgemäßen Tür weisen eine ausgebildete Ecke und einen, in einer vorgegebenen Teilung an vordefinierten Stellen ablängbaren Bereich auf. Es kann damit auf die aufwändige Eckausbildung bzw. die Fügung der Profilelemente in den Ecken verzichtet werden, wodurch deren Montage vereinfacht wird. Durch den ablängbaren Bereich ist es wiederum möglich, das rahmenartige Kernelement der Tür aus einer höheren Anzahl an Standard-Profilelementen herzustellen, wodurch auf Kundensonderwünsche schneller reagiert werden kann.

Nach einer Ausführungsvariante der Tür ist vorgesehen, dass die Profilelemente mittels Spritzguss hergestellt sind. Es kann damit die Genauigkeit der Profilelemente weiter verbessert werden. Zudem kann die Taktzeit zur Herstellung der Profilelemente verkürzt werden.

Darüber hinaus kann durch einen einfachen Werkzeugwechsel eine breitere Palette an Normteilen hergestellt werden.

Der Kunststoffschaum weist bevorzugt ein Raumgewicht von mindestens 80 kg/m³ auf. Die Profilelemente bestehen damit aus einem sehr kompakten Schaumstoff, wodurch die mechanische Festigkeit verbessert werden kann. Darüber hinaus können damit auch die Wärmedämmungseigenschaften durch die Profilelemente verbessert werden.

Es kann weiter vorgesehen sein, dass innerhalb der Profilelemente ein Zugstab angeordnet ist, wodurch die Biegefestigkeit und Torsionsfestigkeit des rahmenartigen Kernelementes verbessert wird. Durch das Einschäumen des Zugstabes kann dessen Anbindung an die Profilelemente verbessert werden.

Nach einer anderen Ausführungsvariante der Tür kann innerhalb der Profilelemente zumindest ein Verstärkungselement angeordnet sein. Es wird damit eine bessere Montagemöglichkeit für die diversen Beschläge an die Profilelemente geschaffen, wobei wiederum von Vorteil ist, dass dieses zumindest eine Verstärkungselement eingeschäumt ist, d.h. während der Herstellung der Profilelemente bereits vorgesehen wird, wodurch die Einbindung des zumindest einen Verstärkungselementes in das jeweilige Profilelement verbessert wird. Andererseits kann durch die Anordnung des zumindest einen Verstärkungselementes die Funktionssicherheit von Beschlägen, etc. über einen längeren Zeitraum gewährleistet werden. Beispielsweise kann damit das Lockern bzw. Ausleiern von Beschlägen über einen längeren Benutzungszeitraum besser verhindert werden.

Zur Verbesserung der Druckfestigkeit der Profilelemente kann vorgesehen sein, dass der Kunststoffschaum eine Stauchhärte nach DIN 53421von mindestens 3 N/mm² aufweist.

Vorzugsweise ist der Kunststoffschaum aus einem duroplastischen Kunststoff hergestellt. Es kann damit die Beständigkeit, insbesondere die Temperaturbeständigkeit, der Tür verbessert werden, sodass diese aufgrund der über die Jahreszeiten betrachteten Temperaturbelastung weniger Angriff für einen Verzug bietet.

Es ist aber auch möglich den Kunststoffschaum aus einem thermoplastischen Kunststoff herzustellen. Es wird damit die Verbindung von mehreren Profilelementen vereinfacht, indem diese miteinander verschweißt werden können. Darüber hinaus sind thermoplastische Kunststoffschäume mittels Spritzgusstechnik einfacher herstellbar. Zudem kann damit auch eine bessere Verbindbarkeit des rahmenartigen Kernelementes der Tür mit weiteren Bestandteilen der Tür erreicht werden.

Es kann weiter vorgesehen werden, dass die Profilelemente formschlüssig miteinander verbunden sind. Dazu werden die Formschlusselemente bereits in der Formgebung des Formteils berücksichtigt, sodass die Profilelemente insbesondere eine vorgegebene Fügerichtung für den Zusammenbau aufweisen. Mittels der formschlüssigen Verbindung kann der Montageaufwand reduziert werden.

Die Profilelemente können mit zumindest einem Versteifungselement verbunden sein. Es wird damit eine weitere Verbesserung der mechanischen Stabilität des rahmenartigen Kernelementes erreicht.

Vorzugsweise ist das Versteifungselement eine Glasscheibe. Von Vorteil ist dabei, dass Glas einerseits eine sehr gute Aussteifung der Tür bewirkt und damit die Stabilität der Tür erhöht. Andererseits kann über das Glas auch die Anbindung des rahmenartigen Kernelementes verbessert werden, da die Glasoberfläche eine einfach und gute Herstellung von Klebeverbindungen ermöglicht. Darüber hinaus ist Glas relativ kostengünstig in der Herstellung. Durch den Einsatz der Glasversteifung kann auf eine besondere Eckfestigkeit des rahmenartigen Kernelementes verzichtet werden, sodass dessen Herstellung vereinfacht wird.

Gemäß einer bevorzugten Ausführungsvariante dazu ist das Versteifungselement zumindest ein Mehrscheiben-Isolierglaselement mit zumindest zwei voneinander beabstandeten Glasscheiben. Durch die Verwendung eines Mehrscheiben-Isolierglaselements wird neben der Verbesserung der mechanischen Eigenschaften der Tür auch eine Verbesserung der Wärmedämmung erreicht.

Es ist dabei auch möglich, dass zwei Versteifungselemente angeordnet sind, die jeweils durch ein Mehrscheiben-Isolierglaselement mit zumindest zwei voneinander beabstandeten Glasscheiben gebildet sind. Es werden damit die Wärmedämmung und die Stabilität der Tür weiter verbessert. Insbesondere von Vorteil ist diese Ausführungsvariante wenn die Türfüllung der Tür eine höhere Schichtdicke aufweist, da der Abstand zwischen zwei Glasscheiben eines Mehrscheiben-Isolierglaselementes gering gehalten werden kann und damit das Volumen zwischen den beiden Glasscheiben ebenfalls kleiner sein kann. Hierdurch wird wiederum erreicht, dass Wärmedehnungen der Gasfüllung in diesem Volumen aufgrund von Temperaturschwankungen einen geringeren Einfluss auf das Ausbauchen der Glasscheiben des Mehrscheiben-Isolierglaselementes haben, d.h. dass das Mehrscheiben-Isolierglaselement formstabiler ist.

Nach einer weiteren Ausführungsvariante der Tür kann vorgesehen sein, dass der Kunststoffschaum faserverstärkt ist. Durch die Faserverstärkung wird dem Kunststoffschaum an sich eine höhere Festigkeit verliehen, wodurch in der Folge das rahmenartige Kernelement der Tür ebenfalls eine höhere mechanische Festigkeit aufweist.

Weiter kann vorgesehen sein, dass in zumindest einem der Profilelemente zumindest eine Ausfachung für einen Beschlag ausgebildet ist, die nicht spanend hergestellt ist. Es werden also die Aufnahmekammern für die Beschläge, wie z.B. Türbänder, etc., bereits während der Schäumens der Profilelemente berücksichtigt und hergestellt, sodass eine nachträgliche Bearbeitung der fertigen Profilelemente für deren Ausbildung nicht mehr erforderlich ist.

Zum besseren Verständnis der Erfindung wird diese anhand der nachfolgenden Figuren näher erläutert.

Es zeigen jeweils in schematisch vereinfachter Darstellung:
- Fig. 1: eine Haustür in Ansicht von vorne;
- Fig. 2: einen Schnitt durch ein Profilelement;
- Fig. 3: ein rahmenartiges Kernelement einer Haustür vor dem Verbinden der Profilelemente;
- Fig. 4: die Verbindung von zwei Profilelementen;
- Fig. 5: einen Schnitt durch eine Haustür.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

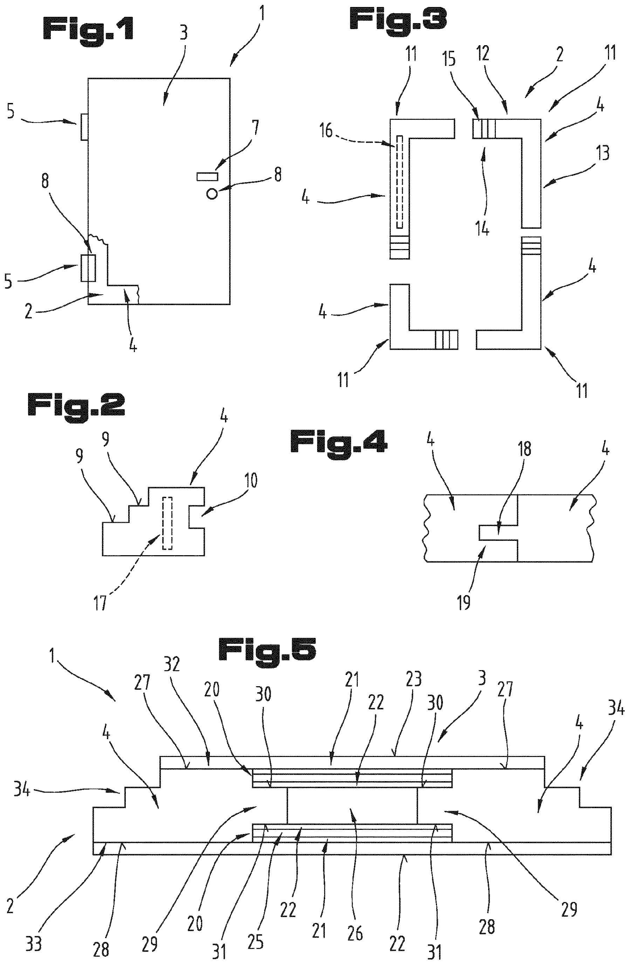

In Fig. 1 ist eine Haustür 1 in Ansicht von vorne und ohne Blendrahmen gezeigt. Mit Ansicht von vorne ist dabei die Ansicht von außen gemeint, wenn die Haustür normal eingebaut ist.

Die Haustür 1 umfasst bzw. besteht aus einem rahmenartigen Kernelement 2 (im Teilschnitt links unten gezeigt) und einer Türfüllung 3, die das Türblatt bildet.

Das rahmenartige Kernelement 2 umfasst bzw. besteht aus miteinander verbundenen Profilelementen 4. Im gegenständlichen Ausführungsbeispiel umfasst die Haustür 1 vier Profilelemente 4.

Weiter weist die Haustür 1 die üblichen Beschläge 5 zur drehbaren Befestigung der Haustür am Blendrahmen bzw. dem Gebäude, einen Türgriff 6, ein Schloss 7, ein oder mehrere Riegel, etc. auf, auf die hier jedoch nicht näher eingegangen wird. Es sei dazu auf den einschlägigen Stand der Technik verwiesen.

Die Profilelemente 4 sind aus einem Kunststoffschaum hergestellt. Sie können miteinander zur Ausbildung des rahmenartigen Kernelementes 2 verschweißt sein.

Die Profilelemente 4 umfassen bzw. bestehen vorzugsweise aus einem duroplastischen Kunststoffschaum, insbesondere einem Polyurethanschaum.

Es ist aber auch möglich, dass die Profilelemente 4 einen thermoplastischen Kunststoffschaum umfassen oder aus diesem bestehen.

In diesem Fall umfassen die Profilelemente 4 vorzugsweise ein expandiertes Polystyrol (EPS), ein expandiertes Polypropylen (EPP), oder bestehen aus einem dieser Kunststoffschäume. Es sind auch mehr als einer dieser Kunststoffschäume zur Herstellung der Profilelemente 4 einsetzbar.

Nach einer bevorzugten Ausführungsvariante der Haustür 1 umfassen bzw. bestehen die Profilelemente 4 aus einem Kunststoffschaum mit einem Raumgewicht von mindestens 80 kg/m³, insbesondere aus einem Kunststoffschaum mit einem Raumgewicht von mindestens 100 kg/m³, vorzugsweise aus einem Kunststoffschaum mit einem Raumgewicht zwischen 100 kg/m³ und 200 kg/m³ bzw. aus einem Kunststoffschaum mit einem Raumgewicht zwischen 100 kg/m³ und 120 kg/m³. Es wird damit eine geringe Materialermüdung bzw. eine bessere Einbruchsicherheit der aus den Profilelementen 4 hergestellten Tür, insbesondere Haustür 1, erreicht.

Weiter ist bevorzugt, wenn der Kunststoffschaum eine Stauchhärte nach DIN 53 421 von mindestens 3 N/mm², insbesondere eine Stauchhärte nach DIN 53 421 zwischen 5 N/mm² und 10 N/mm², aufweist. Erreicht werden kann dies durch eine entsprechende Zugabe von Härtern. Daneben oder alternativ dazu kann die entsprechende Stauchhärte auch durch die entsprechende Rezeptur erreicht werden, beispielsweise bei Polyurethanschäumen durch das Verhältnis der Mengen von Polyol und Isocyanat zueinander. Auch über den Formdruck, also den Druck während des Aufschäumens kann die Stauchhärte zusätzlich dazu oder alternativ dazu eingestellt werden.

Diese Einstellungsmöglichkeiten sind dem Fachmann bekannt, sodass sich weitere Erörterungen dazu erübrigen.

Vorzugsweise wird ein handelsüblicher Kunststoffschaum verwendet, wie er beispielsweise von Bayer erhältlich ist.

Es ist auch möglich, dass die Profilelemente 4, d.h. die Kunststoffschäume, über den Querschnitt in Längsrichtung und/oder in Querrichtung dazu einen Raumgewichtsverlauf, also einen Raumgewichtsgradienten, aufweisen.

Die Profilelemente 4 werden als Formteile hergestellt, d.h. dass sie bereits während der Herstellung den entsprechenden Profilquerschnitt aufweisen und dass die erforderlichen Ausnehmungen 8 für diverse Einbauten bzw. Funktionselemente bzw. zur Aufnahme bzw. Anordnung der Beschläge 5, etc., bereits während der Formgebung ausgebildet werden, sodass also eine nachträgliche spanende Bearbeitung der Profilelemente 4 zur Herstellung dieser Ausnehmungen nicht erforderlich ist. Indem die Profilelemente 4 als Formteile hergestellt werden, erfolgt auch das Aufschäumen der Rohstoffe in der Form.

Die diversen Einbauten bzw. Funktionselemente, wie z.B. die Beschläge 5, etc., können mit dem jeweiligen Profilelement 4 verschraubt, verklebt, bzw. auf eine sonstige geeignete Weise mit dem Profilelement 4 verbunden sein.

Vorzugsweise werden die Profilelemente 4 mittels Formschäumen (duroplastische) oder Spritzguss (thermoplastische) als Formschaumteile oder Spritzgussteile hergestellt.

Zur Veranschaulichung ist in Fig. 2 ein möglicher Profilquerschnitt der Profilelemente 4 dargestellt. Selbstverständlich können die Profilelemente 4 im Rahmen der Erfindung aber auch einen anderen Querschnitt aufweisen.

Im linken Teil der Fig. 2 ist der Querschnitt stufenförmig ausgebildet. Es werden damit Anschlagflächen 9 für die Anlage an den entsprechend geformten Blendrahmen gebildet. Gegebenenfalls kann in diesen Anlageflächen 9 bzw. im Bereich der Anlageflächen 9 zumindest eine Nut zur Aufnahme eines Dichtelementes ausgebildet sein.

Die rechte Seite des Querschnittes des Profilelementes 4 nach Fig. 2 ist zur Aufnahme bzw. zur Anordnung der Türfüllung 3 (Fig. 1) ausgebildet. Es kann dazu zumindest eine Nut 10 ausgebildet sein. Wie dies nachfolgend noch näher ausgeführt wird, kann dieser Bereich des Querschnittes aber auch eine andere Form aufweisen.

In Fig. 3 ist das rahmenartige Kernelement 2 einer Haustür vor dem Verbinden der Profilelemente 4 miteinander dargestellt. Zur Vereinfachung der Fig. wurde auf die Darstellung der Ausnehmungen 8 (Fig. 1) verzichtet.

Wie aus Fig. 3 zu ersehen ist, sind die Profilelemente 4 in der bevorzugten Ausführungsform L-förmig ausgebildet (in Ansicht von vorne). Dadurch wird mit einem Profilelement 4 oder mit jedem Profilelement 4 bereits eine Ecke 11 des rahmenartigen Kernelementes 2 ausgebildet. Es kann damit auf das nachträgliche Fügen der Profilelemente 4 zur Ausbildung der Ecken 11 verzichtet werden. Da die Herstellung einer Eckverbindung der Profilelemente 4 in der Fertigung aufwändiger ist, als wenn die Profilelemente 4 im Verlauf ihrer Längserstreckung verbunden werden, als am Ende von Schenkeln 12, 13 der L-förmigen Profilelemente 4, kann damit die Herstellung des rahmenartigen Kernelementes 2 vereinfacht werden. Zudem ist damit eine geringere Toleranz des rahmenartigen Kernelementes 2 erreichbar.

Ein Endbereich 14 der Profilelemente 4 ist, wie dies in Fig. 3 durch Querstriche 15 angedeutet ist, in einer vorgegebenen Teilung, die anhand von gewünschten Normmaßen für Türen 1 festgelegt werden kann, an vordefinierten Stellen ablängbar ausgebildet. Es ist damit möglich, die Höhe und die Breite der Haustür 1 bzw. der rahmenartigen Kernelementes 2 einfach anpassbar auszubilden. Die Profilelemente 4 können beispielsweise an den Stellen der Querstriche 15 mit einer Einkerbung, etc., ausgeführt sein.

Wenngleich nicht bevorzugt ist es jedoch auch möglich, dass die Profilelemente 4 als gerade Stangenware ohne die vorgefertigte Ecke 11 ausgebildet werden.

Es ist weiter möglich die Profilelemente 4 im Eckbereich gerundet auszuführen, d.h. mit einer Rundung herzustellen. Dies hat den Vorteil, dass eine umlaufende Dichtung ohne Unterbrechung in den Ecken eingebaut werden kann.

Mit den in Fig. 3 dargestellten Profilelemente 4 ist es möglich, die Abmessungen des rahmenartigen Kernelementes 2 anhand von zwei Fixpunkten, die in entlang der Diagonalen des rahmenartigen Kernelementes 4 einander gegenüberliegenden Ecken 11 gesetzt werden, also beispielsweise der in Fig. 3 linken unteren Ecke11 und der rechten oberen Ecke 11, festzulegen. Damit ist es möglich, dass das rahmenartige Kernelement 2 aufgrund der Ablängbarkeit in nur einer Standardgröße hergestellt wird, sodass auf das Vorrätighalten von unterschiedlichen Größen der Profilelemente 4 verzichtet werden kann.

Sofern erforderlich, kann in einem oder mehreren Profilelementen 4 des rahmenförmigen Kernelementes 2 der Haustür 1 zumindest ein Element (Einlegeteil) zur Verbesserung der mechanischen Eigenschaften der Profilelemente 4 angeordnet, insbesondere eingeschäumt sein. Dazu kann dieses Element in die Spritzgussform vor dem Befüllen mit dem aufschäumbaren Kunststoffmaterial eingelegt werden.

Dieses Element kann beispielsweise ein Zugstab 16, wie dies in Fig. 3 strichliert angedeutet ist, oder ein Verstärkungselement 17, wie dies in Fig. 2 strichliert angedeutet ist, sein. Das Verstärkungselement 17 dient zu besseren Anbindung bzw. Verbindung, insbesondere Verschraubung von den für die Haustür 1 verwendeten Beschlägen 5, Riegel, etc. Insbesondere können diese Verstärkungselemente 17 für metallische Elemente verwendet werden, die mit den Profilelementen 4 des rahmenartigen Kernelementes 2 verbunden werden.

Verstärkungselemente 17 können beispielsweise Hülsen, Muttern, Bleche, Metallstreifen, etc. sein.

Selbstverständlich können bei Bedarf auch mehrere dieser Elemente zur Verbesserung der mechanischen Eigenschaften der Profilelemente 4 verwendet werden.

Diese Elemente können beispielsweise aus einem Metall, z.B. Stahl, oder aus mineralischen Fasern, wie insbesondere Glasfasern, Basaltfasern, Carbonfasern, oder aus biogenen Fasern, wie z.B. Hanffasern, bestehen.

Weiter können diese Elemente bandförmig, mit rundem Querschnitt, eckigen Querschnitt, etc. ausgebildet sein.

Die Oberfläche dieser Elemente kann glatt, gerippt, gedrillt, etc., sein.

Es ist möglich, dass diese Elemente zur Verbesserung der mechanischen Eigenschaften der Profilelemente 4 zumindest einen Durchbruch oder zumindest eine Ausnehmung aufweisen, durch den bzw. in die der Kunststoffschaum ragt, um damit die Anbindung dieser Elemente an den Kunststoffschaum zu verbessern.

Wie voranstehend ausgeführt, können die einzelnen Profilelemente 4 zur Herstellung des rahmenartigen Kernelementes 4 miteinander verschweißt werden. Alternativ dazu oder zusätzlich dazu ist es möglich, dass die Profilelemente 4 formschlüssig miteinander verbunden werden. Beispielsweise kann die formschlüssige Verbindung wie in Fig. 5 dargestellt ausgebildet sein. Dazu kann ein Profilelement 4 einen Zapfen 18 und das mit diesem Profilelement 4 zu verbindende weitere Profilelement 4 mit einem Schlitz 19 versehen sein, sodass also der Formschluss als Steckverbindung ausgebildet sein kann.

Selbstverständlich sind auch andere Formen von Formschluss möglich, beispielsweise in Form von Bohrungen, durch die Stäbe oder Bolzen gesteckt werden.

Die Formschlusselemente, also beispielsweise der Zapfen 18 und/oder der Schlitz 19, können bei der Herstellung der Profilelemente 4 bereits mitgeformt werden. Sofern eines oder mehrere Profilelemente 4 abgelängt werden muss oder müssen, kann das jeweils andere Formschlusselement, also beispielsweise der Zapfen 18 oder der Schlitz 19, im Zuge der Ablängung hergestellt werden. Es ist dabei auch möglich, dass der Endbereich 14 des jeweiligen Profilelementes 4 bereits entsprechend vorgefertigt wird, beispielsweise mit entsprechenden Kerben versehen wird, sodass die Herstellung des Formschlusselementes vereinfacht wird.

In der Fig. 5 ist eine weitere und gegebenenfalls für sich eigenständige Ausführungsform der Haustür 1 im Schnitt gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Bei der Ausführungsvariante der Haustür nach Fig. 5 weist die Türfüllung 3 zwei Versteifungselemente 20 auf, die als Mehrscheiben-Isolierglaselement mit zumindest zwei voneinander beabstandeten Glasscheiben 21, 22 gebildet sind.

Es sei darauf hingewiesen, dass im Rahmen der Erfindung auch nur ein Versteifungselement 20 angeordnet sein kann und/oder dass das oder die Versteifungselemente 20 durch ein einfaches Flachglas gebildet sein kann.

Die Versteifungselemente 20 sind hintereinanderliegend angeordnet (bezogen auf die Richtung von einer ersten, äußeren Oberfläche 22 auf eine zweite innere Oberfläche 23 der Haustür 1).

Vorzugsweise erstrecken sich die Versteifungselemente 20 zumindest über die gesamte Fläche, die zwischen den Profilelementen 4 bzw. innerhalb des rahmenartigen Kernelementes 2 ausgebildet ist. Zumindest eines der Versteifungselemente 20 kann sich allerdings auch nur über einen Teilbereich dieser Fläche erstrecken, wobei sich dieses Versteifungselement 20 auch in diesem Fall zumindest über die gesamte Distanz zwischen zwei einander gegenüberliegenden vertikalen oder horizontalen Profilelementen 4 erstreckt. Dieses Versteifungselement 20 erstreckt sich also in jedem Fall über die gesamte Distanz zwischen zwei einander gegenüberliegenden Profilelementen 4 des rahmenartigen Kernelementes 2.

Die Mehrscheiben-Isolierglaselemente können dem Stand der Technik hierfür, wie dieser aus der Fensterindustrie bekannt ist, ausgebildet sein. Demnach sind die beiden Glasscheiben 21, 22 voneinander beabstandet angeordnet, wobei dazwischen ein Abstandhalter angeordnet ist. Ein Zwischenraum 25 zwischen den beiden Glasscheiben 21, 22 kann mit einem Gas, insbesondere einem Edelgas, wie z.B. Helium oder Argon, oder einer Mischung aus einem Edelgas und Luft, gefüllt sein. Um die Gasdichtheit des Mehrscheiben-Isolierglaselementes zu gewährleisten, ist an seinem Umfang ein so genannter Randverbund ausgebildet.

Anstelle eines Gases ist es aber auch möglich, insbesondere in jenen Teilen, in denen das oder die Versteifungselement(e) 20 nicht sichtbar sind, den Zwischenraum 25 mit einem Gel, insbesondere einem Aerogel, zumindest teilweise, insbesondere zur Gänze, zu befüllen. Auch andere Füllungen, wie z.B. Kunststoffschaume, beispielsweise Polyurethanschäume, sind einsetzbar.

Generell kann also der Zwischenraum 23 mit einem wärmedämmenden nicht transparenten oder semitransparenten Material zumindest teilweise gefüllt werden.

Da diese Einzelheiten zum Stand der Technik gehören sei dazu auf die einschlägige Literatur verwiesen.

Es sei darauf hingewiesen, dass das Mehrscheiben-Isolierglaselement auch mehr als zwei Glasscheiben 21, 22 aufweisen kann, beispielsweise drei oder vier, etc.

In Fig. 5 sind die beiden Mehrscheiben-Isolierglaselement unter Ausbildung eines Zwischenraums 26 voneinander beabstandet im rahmenartigen Kernelement 2 der Haustür 1 angeordnet. Dieser Zwischenraum 26 kann beispielsweise mit einem Dämmstoff, z.B. einem Kunststoffschaum, gefüllt sein.

Weiter ist aus Fig. 5 ersichtlich, dass die Mehrscheiben-Isolierglaselemente jeweils bündig mit Oberflächen 27 bzw. 28 der Profilelemente 4 angeordnet sind. Dazu können die Profilelemente 4 einen in Richtung auf die Türfüllung 3 ragenden Steg 29 aufweisen, an dessen Oberflächen 30 bzw. 31 die Mehrscheiben-Isolierglaselemente anliegen und insbesondere damit verbunden, vorzugsweise verklebt, sind.

Selbstverständlich kann aber die Anordnung der Mehrscheiben-Isolierglaselemente auch in Nuten 10 (Fig. 2) der Profilelemente 4 erfolgen.

Anstelle von Glas kann auch ein anderer Werkstoff für das oder die Versteifungselemente 20 verwendet werden, beispielsweise Holz, ein Holzwerkstoff, wie z.B. WPC, ein Kunststoff, etc.

An den beiden äußeren Oberflächen der Mehrscheiben-Isolierglaselemente sind ein erstes plattenförmiges Sichtelement 32 bzw. ein zweites plattenförmiges Sichtelement 33 angeordnet. Insbesondere sind diese Sichtelemente 32, 33 zumindest bereichsweise mit dem jeweiligen Mehrscheiben-Isolierglaselement, d.h. dem jeweiligen Versteifungselement 20, und/oder den Profilelementen 4 verbunden, vorzugsweise verklebt.

Bei der in Fig. 5 dargestellten Ausführungsvariante der Haustür 1 wird das rahmenartige Kernelement 2 sowohl durch das erste plattenförmige Sichtelement 32 als auch durch das zweite plattenförmige Sichtelement 33 an der jeweiligen Seite zur Gänze abgedeckt. Es besteht aber auch die Möglichkeit der nur teilweisen Abdeckung bzw. Überdeckung. In diesem Fall kann der verbleibende Rest der Profilelemente 4 mit einem anderen Werkstoff, z.B. Holz oder Kunststoff, abgedeckt sein.

Weiter kann eine Stirnseite 34 mit einem Werkstoff, z.B. Holz oder Kunststoff, abgedeckt sein, sodass das rahmenartige Kernelement 2 von außen nicht sichtbar ist.

Es sei in diesem Zusammenhang darauf hingewiesen, dass auch das Versteifungselement 20 von außen zur Gänze nicht sichtbar innerhalb der Haustür 1 angeordnet sein kann.

Nach einer anderen Ausführungsvariante der Haustüre kann vorgesehen sein, dass das erste plattenförmige Sichtelement 32 und das zweite plattenförmige Sichtelement 33 jeweils eine Ausnehmung bzw. einen Durchbruch aufweisen, die die Durchsicht durch das Türblatt bzw. die Türfüllung 3 ermöglichen. Die beiden Ausnehmungen sind dabei vorzugsweise gleich groß und befinden sich auf gleicher Höhe.

In einem Sonderfall dazu können die Ausnehmungen so groß sein, dass das Versteifungselement 20, insbesondere das Mehrscheiben-Isolierglaselement, zu 100 % sichtbar ist.

In Fig. 5 sind die beiden Glasscheiben 21, 22 des jeweiligen Mehrscheiben-Isolierglaselementes gleich groß. Es ist jedoch auch möglich, dass die beiden Glasscheiben des Mehrscheiben-Isolierglaselementes unterschiedlich groß sind. Weiter können die beiden Mehrscheiben-Isolierglaselemente der Haustür 1 nach Fig. 3 an sich unterschiedlich groß sein.

Nach einer anderen Ausführungsvariante der Haustür 1 kann vorgesehen sein, dass der Kunststoffschaum der Profilelemente 4 faserverstärkt ist. Als Verstärkungsfasern können beispielsweise mineralische Fasern, wie z.B. Glasfasern, Basaltfasern, Carbonfasern, oder organische Fasern, wie z.B. Kunststofffasern, Holzfasern, etc., verwendet werden.

Die Verstärkungsfasern können eine Länge zwischen 0,8 mm und 25 mm aufweisen.

Der Anteil der Verstärkungsfasern kann zwischen 10 Gew.-% und 50 Gew.-%, insbesondere zwischen 20 Gew.-% und 30 Gew.-%, bezogen auf das gesamte Profilelement 4, betragen.

Die Ausführungsbeispiele zeigen mögliche Ausführungsvarianten der Haustür 1, wobei an dieser Stelle bemerkt sei, dass auch diverse Kombinationen der einzelnen Ausführungsvarianten untereinander möglich.

Der Ordnung halber sei abschließend darauf hingewiesen, dass zum besseren Verständnis des Aufbaus der Haustür 1 diese bzw. deren Bestandteile teilweise unmaßstäblich und/oder vergrößert und/oder verkleinert dargestellt wurden.

### Bezugszeichenaufstellung

- 1: Haustür
- 2: Kernelement
- 3: Türfüllung
- 4: Profilelement
- 5: Beschlag

- 6: Türgriff
- 7: Schloss
- 8: Ausnehmung
- 9: Anschlagfläche
- 10: Nut

- 11: Ecke
- 12: Schenkel
- 13: Schenkel
- 14: Endbereich
- 15: Querstrich

- 16: Zugstab
- 17: Verstärkungselement
- 18: Zapfen
- 19: Schlitz
- 20: Versteifungselement

- 21: Glasscheibe
- 22: Glasscheibe
- 23: Oberfläche
- 24: Oberfläche
- 25: Zwischenraum

- 26: Zwischenraum
- 27: Oberfläche
- 28: Oberfläche
- 29: Steg
- 30: Oberfläche

- 31: Oberfläche
- 32: Sichtelement
- 33: Sichtelement
- 34: Stirnseite

## Patentansprüche

1. Tür, insbesondere Haustür (1), mit einem rahmenartigen Kernelement (2) aus miteinander verbundenen Profilelementen (4), die als Formteil aus einem Kunststoffschaum hergestellt sind, **dadurch gekennzeichnet, dass** die Profilelemente (4) eine ausgebildete Ecke (11) und einen, in einer vorgegebenen Teilung an vordefinierten Stellen ablängbaren Bereich aufweisen.

2. Tür nach Anspruch 1, **dadurch gekennzeichnet, dass** die Profilelemente (4) mittels Formschäumen oder Spritzguss hergestellt sind.

3. Tür nach Anspruch 1 oder 2, **dadurch gekennzeichnet, dass** der Kunststoffschaum ein Raumgewicht von mindestens 80 kg/m³ aufweist.

4. Tür nach einem der Ansprüche 1 bis 3, **dadurch gekennzeichnet, dass** innerhalb der Profilelemente (4) zumindest ein Zugstab (16) angeordnet ist.

5. Tür nach einem der Ansprüche 1 bis 4, **dadurch gekennzeichnet, dass** innerhalb der Profilelemente (4) zumindest ein Verstärkungselement (17) angeordnet ist

6. Tür nach einem der Ansprüche 1 bis 5, **dadurch gekennzeichnet, dass** der Kunststoffschaum eine Stauchhärte von mindestens 3 N/mm² aufweist.

7. Tür nach einem der Ansprüche 1 bis 6, **dadurch gekennzeichnet, dass** der Kunststoffschaum aus einem duroplastischen oder thermoplastischen Kunststoff hergestellt ist.

8. Tür nach einem der Ansprüche 1 bis 7, **dadurch gekennzeichnet, dass** die Profilelemente (4) formschlüssig miteinander verbunden sind.

9. Tür nach einem der Ansprüche 1 bis 8, **dadurch gekennzeichnet, dass** die Profilelemente (4) mit zumindest einem Versteifungselement (20) verbunden sind.

10. Tür nach Anspruch 9, **dadurch gekennzeichnet, dass** das Versteifungselement (20) eine Glasscheibe ist.

11. Tür nach Anspruch 9, **dadurch gekennzeichnet, dass** das Versteifungselement (20) ein Mehrscheiben-Isolierglaselement mit zumindest zwei voneinander beabstandeten Glasscheiben (21, 22) ist.

12. Tür nach einem der Ansprüche 1 bis 11, **dadurch gekennzeichnet, dass** der Kunststoffschaum faserverstärkt ist.

13. Tür nach einem der Ansprüche 1 bis 12, **dadurch gekennzeichnet, dass** in zumindest einem der Profilelemente (4) zumindest eine Ausfachung für einen Beschlag ausgebildet ist, die nicht spanend hergestellt ist.

## Claims

1. A door, in particular a front door (1), having a frame-like core element (2) of profile elements (4) connected to one another, said profile elements (4) being produced from a plastic foam as a molded part, **characterized in that** the profile elements (4) comprise a formed edge (11) and a region that can be cut to length at predefined locations in a predefined partition.

2. The door according to claim 1, **characterized in that** the profile elements (4) are produced by means of foam molding or injection molding.

3. The door according to claim 1 or 2, **characterized in that** the plastic foam has a volumetric weight of at least 80 kg/m³.

4. The door according to one of claims 1 to 3, **characterized in that** at least one tension rod (16) is arranged within the profile elements (4).

5. The door according to one of claims 1 to 4, **characterized in that** at least one enforcement element (17) is arranged within the profile elements (4).

6. The door according to one of claims 1 to 5, **characterized in that** the plastic foam has a compressive strength of at least 3 N/mm².

7. The door according to one of claims 1 to 6, **characterized in that** the plastic foam is produced from a thermosetting plastic material or a thermoplastic material.

8. The door according to one of claims 1 to 7, **characterized in that** the profile elements (4) are connected to one another in a positively locked manner.

9. The door according to one of claims 1 to 8, **characterized in that** the profile elements (4) are connected to at least one stiffening element (20).

10. The door according to claim 9, **characterized in that** the stiffening element (20) is a glass pane.

11. The door according to claim 9, **characterized in that** the stiffening element (20) is a multiple-pane insulating glass element with at least two glass panes (21, 22) arranged at a distance from one another.

12. The door according to one of claims 1 to 11, **characterized in that** the plastic foam is fiber-reinforced.

13. The door according to one of claims 1 to 12, **characterized in that** at least one infill, which is not produced by machining, for a fitting is formed in at least one of the profile elements (4).

## Revendications

1. Porte, plus particulièrement porte de maison (1), avec un élément de noyau de type cadre (2), constitué d'éléments profilés (4) reliés entre eux, qui sont fabriqués par moulage à partir d'une mousse de matière plastique, **caractérisée en ce que** les éléments profilés (4) comprennent un angle (11) et une zone pouvant être découpée, dans une division prédéterminée, à des points prédéfinis.

2. Porte selon la revendication 1, **caractérisée en ce que** les éléments profilés (4) sont fabriqués au moyen de mousses moulées ou par injection.

3. Porte selon la revendication 1 ou 2, **caractérisée en ce que** la mousse de matière plastique présente un poids spécifique d'au moins 80 kg/m³.

4. Porte selon l'une des revendications 1 à 3, **caractérisée en ce que**, à l'intérieur des éléments profilés (4) est disposé au moins un tirant (16).

5. Porte selon l'une des revendications 1 à 4, **caractérisée en ce que**, à l'intérieur des éléments profilés (4) est disposé au moins un élément de renforcement (17).

6. Porte selon l'une des revendications 1 à 5, **caractérisée en ce que** la mousse de matière plastique présente une résistance à la compression d'au moins 3 N/mm².

7. Porte selon l'une des revendications 1 à 6, **caractérisée en ce que** la mousse de matière plastique est constituée d'une matière plastique thermodurcissable ou thermoplastique.

8. Porte selon l'une des revendications 1 à 7, **caractérisée en ce que** les éléments profilés (4) sont reliés entre eux par complémentarité de forme.

9. Porte selon l'une des revendications 1 à 8, **caractérisée en ce que** les éléments profilés (4) sont reliés avec au moins un élément de rigidification (20).

10. Porte selon la revendication 9, **caractérisée en ce que** l'élément de rigidification (20) est une plaque de verre.

11. Porte selon la revendication 9, **caractérisée en ce que** l'élément de rigidification (20) est un élément en verre isolant à plusieurs plaques avec au moins deux plaques de verre (21, 22) écartées l'une de l'autre.

12. Porte selon l'une des revendications 1 à 11, **caractérisée en ce que** la mousse de matière plastique est renforcée par des fibres.

13. Porte selon l'une des revendications 1 à 12, **caractérisée en ce que**, dans au moins un des éléments profilés (4) est réalisé au moins un remplissage pour une ferrure, qui n'est pas réalisé par enlèvement de copeaux.
